# EUROPEAN PATENT APPLICATION

(11) **EP 4 552 723 A1**
(43) Date of publication of application: **14.05.2025**
(21) Application number: 23209469.8
(22) Date of filing: 13.11.2023
(51) Int. Cl.: B01D 53/00, C07C 2/04

(54) **SYSTEM AND METHOF FOR TREATING GASEOUS ETHYLENE FROM OLIGOMERIZATION REACTOR**

(71) Applicant: SABIC Global Technologies B.V., 4612 PX Bergen op Zoom (NL)
(72) Inventor: Almuhanna, Omar Abdullah, 4612 PX Bergen op Zoom (NL); Attamim, Muhamad Rafiq, 4612 PX Bergen op Zoom (NL)
(74) Representative: Hoeger, Stellrecht & Partner Patentanwälte mbB

(57) **Abstract**

The disclosure provides a method for separating entrained liquid from gaseous ethylene leaving an ethylene oligomerization reactor, the method including introducing a gaseous ethylene stream comprising entrained liquid into a cyclone separator; withdrawing a top product stream including gaseous ethylene from the cyclone separator; withdrawing a liquid bottom product stream including at least one linear alpha olefin and/or polymeric material from the cyclone separator, the liquid bottom product stream optionally combined with a linear alpha olefin product stream from the ethylene oligomerization reactor; and passing the top product stream including gaseous ethylene through one or more heat exchangers to form a cooled gaseous ethylene stream, which is optionally recycled to the ethylene oligomerization reactor.

## Description

### TECHNOLOGICAL FIELD

The present disclosure relates to systems and methods for treating gaseous ethylene from a reactor, such as a reactor adapted to produce linear alpha olefin products.

### BACKGROUND

Linear olefins are a class of hydrocarbons useful as raw materials in the petrochemical industry and among these the linear alpha olefins, unbranched olefins whose double bond is located at a terminus of the chain, form an important subclass. Linear alpha olefins can be converted to linear primary alcohols by hydroformylation. Hydroformylation can also be used to prepare aldehydes, which in turn can be oxidized to afford synthetic fatty acids, especially those with an odd carbon number, useful in the production of lubricants. Linear alpha olefins are also used in the production of detergents, such as linear alkylbenzenesulfonates, which are prepared by Fiedel-Crafts reaction of benzene with linear olefins followed by sulfonation.

Preparation of alpha olefins is based largely on oligomerization of ethylene, which has a corollary that the alpha-olefins produced have an even number of carbon atoms. Oligomerization processes for ethylene mainly utilize organoaluminum compounds or transition metals as catalysts. Oligomerization methods are typically carried out in the presence of a catalyst that includes a zirconium component, such as zirconium tetraisobutyrate, and an aluminum component as activator, such as ethyl aluminum sesquichloride. Typically, the effluent from the reactor used to produce the linear alpha olefins is directed to one or more distillation columns to separate the various fractions of linear alpha olefins.

Excess ethylene from the oligomerization reaction is typically removed in an overhead stream from the reactor and eventually recycled for reuse in the reaction. One problem associated with the oligomerization reaction is polymer fouling in the ethylene recycle loop. Such fouling can lead to undesirable reactor shutdowns and present removal challenges. There remains a need in the art for improved techniques to address polymer fouling within the reaction system.

### BRIEF SUMMARY

Example implementations of the present disclosure are directed to systems and processes for preventing polymer fouling in an ethylene recycle loop associated with an oligomerization reactor. Polymer fouling in the form of liquid droplets, typically referred to as "carry-over," is often entrained in the gaseous ethylene leaving the overhead of the oligomerization reactor. The overhead ethylene stream is typically cooled in one or more heat exchangers and the presence of polymeric material entrained in the gaseous ethylene can foul the heat exchanger equipment, leading to the need for costly reactor shutdowns for flushing/cleaning of the equipment. It has been discovered that placement of a cyclone separator upstream of one or more heat exchangers in the ethylene recycle loop can prevent or reduce polymer fouling of downstream equipment, which can reduce reactor downtime, reduce cleaning chemical consumption, and minimize fouling rate during production.

The present disclosure includes, without limitation, the following embodiments.

Embodiment 1: A method for separating entrained liquid from gaseous ethylene from an ethylene oligomerization reactor, comprising: introducing a gaseous ethylene stream comprising entrained liquid into a cyclone separator; withdrawing a gaseous product stream comprising ethylene from the cyclone separator; withdrawing a liquid product stream comprising at least one linear alpha olefin and/or polymeric material from the cyclone separator, the liquid bottom product stream optionally combined with a linear alpha olefin product stream from an ethylene oligomerization reactor; passing the gaseous product stream comprising ethylene through one or more heat exchangers to form a cooled gaseous ethylene stream, and optionally recycling the gaseous ethylene stream to the ethylene oligomerization reactor.

Embodiment 2: The method of Embodiment 1, further comprising passing the gaseous product stream comprising ethylene through a plurality of heat exchangers to form the cooled gaseous ethylene stream.

Embodiment 3: The method of Embodiment 1 or Embodiment 2, wherein at least one of the plurality of heat exchangers preheats a gaseous ethylene stream fed to an ethylene oligomerization reactor.

Embodiment 4: The method of any one of Embodiments 1 to 3, further comprising introducing the cooled gaseous ethylene stream into a gas-liquid separator to separate a condensed liquid from the cooled gaseous ethylene stream, the gas-liquid separator producing a liquid product stream and a gaseous product stream comprising ethylene.

Embodiment 5: The method of any one of Embodiments 1 to 4, further comprising compressing the gaseous product stream comprising ethylene from the gas-liquid separator to form a compressed gaseous ethylene stream, and recycling the compressed gaseous ethylene stream to an ethylene oligomerization reactor.

Embodiment 6: The method of any one of Embodiments 1 to 5, wherein the compressed gaseous ethylene stream is preheated in at least one of the plurality of heat exchangers upstream of the ethylene oligomerization reactor.

Embodiment 7: The method of any one of Embodiments 1 to 6, further comprising mixing additional solvent with the gaseous ethylene stream comprising entrained liquid upstream of the cyclone separator.

Embodiment 8: The method of any one of Embodiments 1 to 7, wherein the weight ratio of the additional solvent to the gaseous ethylene stream comprising entrained liquid is about 0.005 to about 0.05, such as about 0.01 to about 0.03.

Embodiment 9: The method of any one of Embodiments 1 to 8, wherein (a) the gaseous product stream from the cyclone separator comprises C4- hydrocarbons; and/or (b) the liquid product stream from the cyclone separator comprises C7+ hydrocarbons.

Embodiment 10: The method of any one of Embodiments 1 to 9, wherein the gaseous ethylene stream comprising entrained liquid is produced in an ethylene oligomerization reactor, the reactor producing the gaseous ethylene stream comprising entrained liquid and a liquid linear alpha olefin product stream.

Embodiment 11: A system for separating entrained liquid from gaseous ethylene from an ethylene oligomerization reactor, comprising: an ethylene oligomerization reactor, the reactor producing a gaseous ethylene stream comprising entrained liquid and a liquid linear alpha olefin product stream; a cyclone separator in fluid communication with the gaseous ethylene stream comprising entrained liquid, the cyclone separator producing a gaseous product stream comprising ethylene and a liquid product stream comprising at least one linear alpha olefin and/or polymeric material, optionally the liquid product stream being in fluid communication with the liquid linear alpha olefin product stream from the ethylene oligomerization reactor; and one or more heat exchangers in fluid communication with the gaseous product stream comprising ethylene from the cyclone separator and producing a cooled gaseous ethylene stream.

Embodiment 12: The system of Embodiment 11, further comprising a source of additional solvent in fluid communication with the gaseous ethylene stream comprising entrained liquid upstream of the cyclone separator.

Embodiment 13: The system of Embodiment 11 or Embodiment 12, further comprising a gas-liquid separator in fluid communication with the cooled gaseous ethylene stream leaving the one or more heat exchangers and producing a liquid product stream and a gaseous product stream comprising ethylene.

Embodiment 14: The system of any one of Embodiments 11 to 13, further comprising a compressor in fluid communication with the gaseous product stream comprising ethylene from the gas-liquid separator.

Embodiment 15: The system of any one of Embodiments 11 to 14, wherein an effluent from the compressor is in fluid communication with the ethylene oligomerization reactor for recycle of gaseous ethylene.

Embodiment 16: The system of any one of Embodiments 11 to 15, wherein the effluent from the compressor is in fluid communication with at least one of the one or more heat exchangers for preheating the effluent upstream of the ethylene oligomerization reactor.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable, unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURES

Having thus described aspects of the disclosure in the foregoing general terms, reference will now be made to the accompanying figures, which are not necessarily drawn to scale, and wherein:
FIG. 1 is a block diagram of an ethylene oligomerization system according to an example implementation of the present disclosure;
FIG. 2 is a simplified schematic diagram of an example ethylene oligomerization reactor in accordance with the present disclosure; and
FIG. 3 is a simplified schematic diagram of an example implementation of a gaseous ethylene treatment system according to the present disclosure.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

All ranges disclosed herein are inclusive of the endpoints, and the endpoints are independently combinable with each other (e.g., ranges of "up to 25 wt. %, or, more specifically, 5 wt. % to 20 wt. %", is inclusive of the endpoints and all intermediate values of the ranges of "5 wt. % to 25 wt. %," etc.). "Combination" is inclusive of blends, mixtures, alloys, reaction products, and the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form.

### Ethylene Oligomerization Process and System

Linear alpha olefins (LAOs) are olefins with a chemical formula CₓH₂ₓ, distinguished from other mono-olefins with a similar molecular formula by linearity of the hydrocarbon chain and the position of the double bond at the primary or alpha position. Linear alpha olefins comprise a class of industrially important alpha-olefins, including 1-butene, 1-hexene, 1-octene, 1-decene, 1-dodecene, 1-tetradecene, 1-hexadecene, 1-octadecene, and higher blends of C₂₀-C₂₄, C₂₄-C₃₀, and C₂₀-C₃₀ olefins. Linear alpha olefins are useful intermediates for the manufacture of detergents, synthetic lubricants, copolymers, plasticizers, and many other important products.

Existing processes for the production of linear alpha olefins typically rely on the oligomerization of ethylene. For example, linear alpha olefins can be prepared by the catalytic oligomerization of ethylene in the presence of a Ziegler-Natta-type catalyst or non-Ziegler-Natta-type catalyst.

Oligomerization can occur at temperatures of 10 to 200 °C, for example, 20 to 100 °C, for example, 50 to 90 °C, for example, 55 to 80 °C, for example, 60 to 70 °C. Operating pressures can be 1 to 5 MegaPascals (MPa), for example, 2 to 4 MPa. The process can be continuous and mean residence times can be 10 minutes to 20 hours, for example 30 minutes to 4 hours, for example, 1 to 2 hours. Residence times can be chosen so as to achieve the desired conversion at high selectivity.

The process can be conducted in solution using an inert solvent, which is advantageously non-reactive with the catalyst composition. Examples of desirable organic solvents can include, but are not limited to, aromatic hydrocarbon solvents which can be unsubstituted or substituted with halogens, for example, toluene, benzene, xylene, monochlorobenzene, dichlorobenzene, chlorotoluene; aliphatic paraffin hydrocarbons, for example, pentane, hexane, heptane, octane, nonane, decane; alicyclic hydrocarbon compounds, for example, cyclohexane, decahydronaphthalene; and halogenated alkanes, for example, dichloroethane and dichlorobutane.

The process can be carried out in any reactor, such as a loop reactor, a plug-flow reactor, or a bubble column reactor. Oligomerization of ethylene is an exothermic reaction that can be cooled by a surplus flow of ethylene. The gases leaving at a top portion of the reactor can be cooled using a series of external coolers and condensers. The gas phase, after further cooling, can be recycled.

A bottom stream leaving the oligomerization reactor from a bottom portion can contain the active catalyst and unreacted ethylene. The reaction can be terminated to avoid undesirable side reactions by removing catalyst components from the organic phase through extraction with a caustic aqueous phase. Contact with the caustic aqueous phase can result in formation of nonreactive minerals corresponding to the catalyst components.

The organic phase, after passage through the catalyst removal system, can pass through a molecular sieve absorption bed and can then be fed to a distillation column to recover dissolved ethylene. Recovered ethylene can be recycled via an ethylene recycle loop while the product is fed to an intermediate vessel, after which the product can be fed to a separation section. In certain embodiments, the linear alpha olefins produced from the reactor can be directed into a separation train.

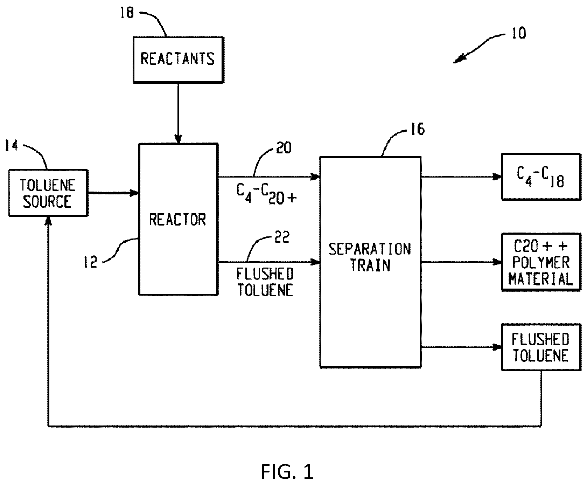

As illustrated in FIG. 1, the system 10 can include a reactor 12, a toluene (or other solvent) source 14, and a separation train 16. In normal production mode, reactants 18, such as ethylene, solvent, and a catalyst can be fed into the reactor 12 to produce linear alpha olefins and a polymeric by-product material. After the reaction, a discharge stream 20 can be directed into the separation train 16, wherein the discharge stream can include unreacted reactants, the produced linear alpha olefins, such as C₄-C₂₀₊, solvent, and catalyst. The separation train 16 can be configured to separate the linear alpha olefins from the solvent, catalyst, and any unreacted ethylene. The separation train 16 can separate each linear alpha olefin, for example, yielding a C₄ stream, C₅ stream, C₆ stream, and so on. The separation train 16 can also separate the linear alpha olefins into certain fractions, such as C₄-C₁₀ fraction, C₁₁-C₁₇ fraction, C₁₈-C₂₀ fraction, C₂₀₊ fractions, or any other desired fraction.

The linear alpha olefin product can be isolated using procedures including aqueous caustic catalyst quench followed by water washing and final product recovery by distillation. For example, the liquid product including the solvent (e.g., toluene) with the dissolved ethylene can be fed to the separation train 16 as noted above. In a first column, the unconsumed ethylene can be separated from the linear alpha olefin product and the solvent. The ethylene can be recycled back to the reactor. The heavier fractions can be routed to the subsequent separation section where the heavier fractions can be divided into the different linear alpha olefin fractions (e.g., C8, C10, >C12). The solvent can be recovered and also recycled back to the reactor.

Polymer fouling within the reactor can occur during the oligomerization reaction process. Such fouling is typically detected by, for example, reduced effluent flow rates, reduced internal condenser performance, increased differential pressure at various locations within the reactor, and the like. Such fouling can be treated by flushing the reactor with toluene or another solvent to remove polymeric material by-product. The flushed toluene comprising the polymeric material can be directed into a separation train comprising the linear alpha olefin reaction products. The polymeric material is soluble in at least one of the linear alpha olefins, such that the flushed toluene can exit the separation train essentially free of the polymeric material and can be recycled back to the toluene source for subsequent flushing of the reactor.

Accordingly, in a flushing mode, the reactor 12 can be flushed with toluene or another solvent from the source 14 to remove the polymeric by-product buildup in the reactor equipment. The flushed toluene containing the polymeric material can be directed into the separation train 16 via line 22. Because the polymeric material is more soluble in the C₂₀₊ linear alpha olefins than toluene, the polymeric material can be separated from the flushed toluene and the C₄-C₁₈ fractions by dissolving into the C₂₀₊ linear alpha olefins. As a result, in certain embodiments, the flushed toluene separated in the separation train 16 can be recycled back to the toluene source for further flushing without needing further purification.

### Bubble Column Reactor

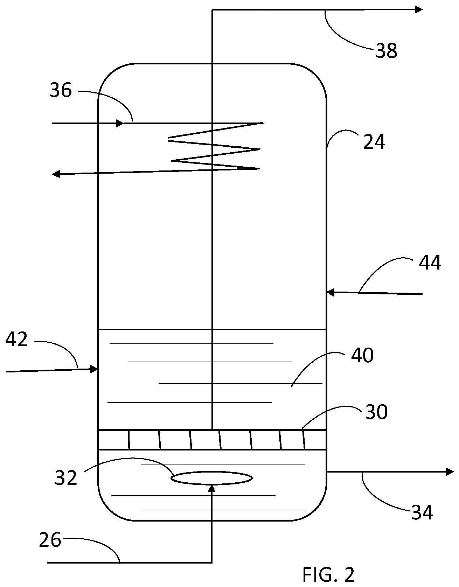

In one embodiment, the oligomerization process can be carried out in a bubble column reactor. FIG. 2 depicts an example bubble column reactor 24 for use in the present disclosure. Ethylene can be introduced using feed stream 26 to the reactor 24 via a gas distribution system attached to a bottom section of the bubble column reactor, which typically includes one or both of a gas sparger plate 30 and a gas bubbler 32. The gas distribution system disperses the gaseous ethylene evenly throughout the reactor 24. Gaseous ethylene rises up through a liquid composition 40 within the reactor 24, which typically includes linear alpha olefins, a solvent such as toluene, and a catalyst. For example, catalyst can enter the reactor 24 through a catalyst injection stream 42. Toluene or another solvent can enter the reactor 24 through solvent injection stream 44. An oligomerization reaction can occur as the gaseous ethylene interacts with the liquid composition, producing reaction products that can include polymer droplets and linear alpha olefin droplets.

The liquid heavy linear alpha olefins, together with the solvent and the catalyst, can be withdrawn from the bottom section of the reactor 24 via bottom effluent stream 34. A portion of the formed linear alpha olefins, which are gaseous under reaction conditions, can be condensed at a top portion of the reactor using an internal condenser 36 and can serve as reflux for cooling purposes, taking advantage of the respective heat of evaporation. Gaseous ethylene and light linear alpha olefins can be removed at the top of the bubble column reactor via top effluent stream 38. One or both effluent streams can be further treated using additional downstream processing units, such as condensers, heat exchangers, distillation columns, and the like. For example, a separation train as shown in FIG. 1 can be used to purify the effluent streams into various product and/or recyclable streams.

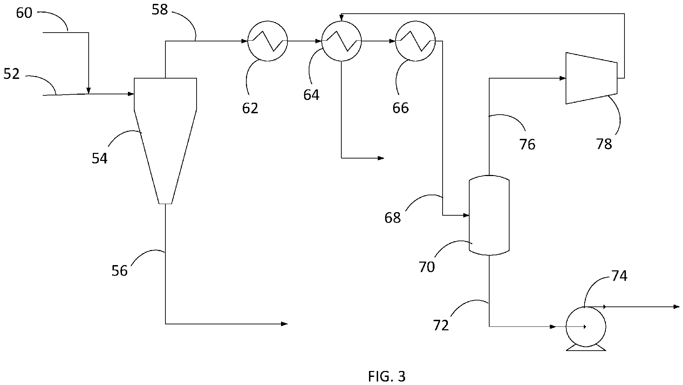

FIG. 3 illustrates an example embodiment of a treatment system for the gaseous ethylene overhead stream from an oligomerization reactor, such as overhead stream 38 from reactor 24 of FIG. 2. In certain embodiments, the overhead stream from the reactor has a pressure in the range of about 26 to about 32 barg (e.g., about 29 barg) and a temperature of about 40 to about 45 °C. Such streams typically include entrained liquid, which can comprise minor amounts of polymeric material in the form of liquid droplets that can foul downstream equipment. Such gaseous ethylene streams are predominately ethylene, with typical ethylene amounts of about 85% by weight or higher or about 88% by weight or higher or about 90% by weight or higher (e.g., about 85 to about 95% by weight ethylene). The gaseous ethylene stream may also include small amounts of solvent (e.g., about 5% by weight or less solvent such as about 1% to about 5% by weight solvent), small amounts of light LAO components such as C7-hydrocarbons (e.g., about 8% by weight or less light LAO components such as about 4% to about 8% light LAO components), and small amounts of heavy hydrocarbons such as C8+ hydrocarbons including polymeric material (e.g., about 2% or less by weight of heavy hydrocarbons such as about 0.5% to about 2% by weight of heavy hydrocarbons).

As shown in FIG. 3, the gaseous ethylene stream 52 is first treated in a cyclone separator 54, which separates a liquid effluent stream 56 from the gaseous effluent and produces an overhead gaseous effluent 58 with reduced liquid content. The overhead effluent stream 58 typically comprises gaseous ethylene and any C4- hydrocarbons present in the overhead effluent from the reactor. The liquid effluent stream 56 typically comprises solvent, at least one linear alpha olefin and/or polymeric material, such as any C7+ hydrocarbons present in the overhead effluent from the reactor. C6 hydrocarbons present in the overhead effluent from the reactor may be partitioned between the liquid and gaseous streams from the cyclone separator 54 and therefore present in both streams. Optionally, the liquid effluent stream 56 can be combined with the liquid effluent from the oligomerization reactor (such as liquid effluent 34 from reactor 24 of FIG. 2) and treated in a separation train as shown in FIG. 1.

The cyclone separator 54 operates by using centrifugal, gravitational, and inertial forces to remove fine particles suspended in gas. In particular, cyclonic action is used to separate particles or droplets from a gas stream. The cyclone separator 54 is typically adapted for introduction of the feed gas from the side such that gas entering the interior of the cyclone separator is spun rapidly, creating a centrifugal force that directs particles towards the wall of the cyclone separator. The gas exit from the cyclone separator 54 is typically proximal to the top of the cyclone separator, while the liquid exit is typically proximal to the bottom of the vessel. The cyclone separator is typically constructed of a heat-resistant metal or metal alloy, such as titanium or stainless steel.

In certain embodiments, mixing additional solvent with the gaseous ethylene stream 52 entering the cyclone separator 54 can improve separation efficiency by increasing mass exchange/extraction of heavier LAO components from the ethylene, and can also serve as a flushing medium to dissolve polymer fouling. Accordingly, as shown in FIG. 3, an additional solvent stream 60 can be combined with the gaseous ethylene stream 52 upstream of the cyclone separator 54. The weight ratio of the additional solvent to the gaseous ethylene stream can be, for example, about 0.005 to about 0.05, such as about 0.01 to about 0.03.

The gaseous effluent 58 from the cyclone separator 54 can be treated in one or more heat exchangers to prepare the ethylene gas for recycle to an oligomerization reactor. FIG. 3 illustrates one embodiment of such a heat exchange system. As shown, the gaseous effluent 58 passes through a series of three heat exchangers, 62, 64, and 66. The type of heat exchanger can vary, and will include, for example, shell and tube heat exchangers, plate and frame heat exchangers, spiral plate heat exchangers, plate and shell heat exchangers, or kettle heat exchangers. The fluid used to exchange heat with the gaseous effluent 58 may vary, and can include, for example, cooling water, chilled water, refrigerant, and any gaseous or liquid process streams requiring preheating. In certain embodiments, the first heat exchanger 62 in the series uses cooling water as the heat exchange fluid, the second heat exchanger 64 is used to preheat the ethylene recycle stream as explained below, and the third heat exchanger 66 uses chilled water or refrigerant as the heat exchange fluid. In certain embodiments, the gaseous effluent leaving the heat exchangers and entering the gas-liquid separator 70 noted below has a temperature below about 5 °C.

Following the series of heat exchangers, the cooled gaseous stream 68 optionally passes through a gas-liquid separator 70 to remove any residual liquid. Example gas-liquid separators include flash drums, knock-out drums, knock-out pots, compressor suction drums, and the like. The liquid condensate 72 from the gas-liquid separator 70 can be pumped via pump 74 and sent to a separation train (e.g., separation train 16 of FIG. 1) to recover any remaining ethylene and to separate LAO components. The dried, ethylene-containing, gaseous stream 76 leaving the gas-liquid separator 70 is typically compressed in compressor 78 and ultimately returned to the oligomerization reactor, such as reactor 24 in FIG. 2. As shown, optionally the gaseous stream 76 is preheated in heat exchanger 64 before return to the reactor. In this manner, efficient use of heat energy in the system is accomplished by simultaneously cooling the overhead effluent stream 58 and preheating the recycle stream to the reactor.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

Many modifications and other implementations of the disclosure will come to mind to one skilled in the art to which this disclosure pertains having the benefit of the teachings presented in the foregoing descriptions and the associated figures. Therefore, it is to be understood that the disclosure is not to be limited to the specific implementations disclosed herein and that modifications and other implementations are intended to be included within the scope of the appended claims. Although specific terms are employed herein, they are used in a generic and descriptive sense only and not for purposes of limitation.

## Claims

1. A method for separating entrained liquid from gaseous ethylene from an ethylene oligomerization reactor, comprising:
(i) introducing a gaseous ethylene stream comprising entrained liquid into a cyclone separator;
(ii) withdrawing a gaseous product stream comprising ethylene from the cyclone separator;
(iii) withdrawing a liquid product stream comprising at least one linear alpha olefin and/or polymeric material from the cyclone separator; and
(iv) passing the gaseous product stream comprising ethylene through one or more heat exchangers to form a cooled gaseous ethylene stream.

2. The method of claim 1, further comprising passing the gaseous product stream comprising ethylene through a plurality of heat exchangers to form the cooled gaseous ethylene stream.

3. The method of clam 2, wherein at least one of the plurality of heat exchangers preheats a gaseous ethylene stream fed to an ethylene oligomerization reactor.

4. The method of any one of claims 1 to 3, further comprising introducing the cooled gaseous ethylene stream into a gas-liquid separator to separate a condensed liquid from the cooled gaseous ethylene stream, the gas-liquid separator producing a liquid product stream and a gaseous product stream comprising ethylene.

5. The method of claim 4, further comprising compressing the gaseous product stream comprising ethylene from the gas-liquid separator to form a compressed gaseous ethylene stream, and recycling the compressed gaseous ethylene stream to an ethylene oligomerization reactor.

6. The method of claim 5, wherein the compressed gaseous ethylene stream is preheated in at least one of the plurality of heat exchangers upstream of the ethylene oligomerization reactor.

7. The method of any one of claims 1 to 6, further comprising mixing additional solvent with the gaseous ethylene stream comprising entrained liquid upstream of the cyclone separator.

8. The method of claim 7, wherein the weight ratio of the additional solvent to the gaseous ethylene stream comprising entrained liquid is about 0.005 to about 0.05, such as about 0.01 to about 0.03.

9. The method of any one of claims 1 to 8, wherein (a) the gaseous product stream from the cyclone separator comprises C4- hydrocarbons; and/or (b) the liquid product stream from the cyclone separator comprises C7+ hydrocarbons.

10. A system for separating entrained liquid from gaseous ethylene from an ethylene oligomerization reactor, comprising:
(i) an ethylene oligomerization reactor, the reactor producing a gaseous ethylene stream comprising entrained liquid and a liquid linear alpha olefin product stream;
(ii) a cyclone separator in fluid communication with the gaseous ethylene stream comprising entrained liquid, the cyclone separator producing a gaseous product stream comprising ethylene and a liquid product stream comprising at least one linear alpha olefin and/or polymeric material; and
(iii) one or more heat exchangers in fluid communication with the gaseous product stream comprising ethylene from the cyclone separator and producing a cooled gaseous ethylene stream.

11. The system of claim 10, further comprising a source of additional solvent in fluid communication with the gaseous ethylene stream comprising entrained liquid upstream of the cyclone separator.

12. The system of claim 10 or claim 11, further comprising a gas-liquid separator in fluid communication with the cooled gaseous ethylene stream leaving the one or more heat exchangers and producing a liquid product stream and a gaseous product stream comprising ethylene.

13. The system of claim 12, further comprising a compressor in fluid communication with the gaseous product stream comprising ethylene from the gas-liquid separator.

14. The system of claim 13, wherein an effluent from the compressor is in fluid communication with the ethylene oligomerization reactor for recycle of gaseous ethylene.

15. The system of claim 14, wherein the effluent from the compressor is in fluid communication with at least one of the one or more heat exchangers for preheating the effluent upstream of the ethylene oligomerization reactor.
